# EUROPÄISCHE PATENTSCHRIFT

(11) **EP 3 483 569 B1**
(45) Veröffentlichungstag und Bekanntmachung des Hinweises auf die Patenterteilung: **25.08.2021**
(21) Anmeldenummer: 17201675.0
(22) Anmeldetag: 14.11.2017
(51) Int. Cl.: G01F 23/284, G01S 13/00, G01S 13/88, H01Q 1/22, H01Q 13/02

(54) **FÜLLSTANDMESSGERÄT MIT POTENTIALTRENNUNG IM WELLENLEITER**
FILL LEVEL MEASURING DEVICE WITH GALVANIC ISOLATION IN WAVEGUIDE
APPAREIL DE MESURE DE NIVEAU DE REMPLISSAGE AVEC SÉPARATION GALVANIQUE DANS LE GUIDE D'ONDES

(43) Veröffentlichungstag der Anmeldung: 15.05.2019
(73) Patentinhaber: VEGA Grieshaber KG, 77709 Wolfach (DE)
(72) Erfinder: KIENZLE, Klaus, 77736 Zell am Harmersbach (DE); SCHULTHEISS, Daniel, 78132 Hornberg (DE); LENK, Fritz, 77761 Schiltach (DE); BAUR, Roland, 78126 Königsfeld (DE)
(74) Vertreter: Maiwald Patent- und Rechtsanwaltsgesellschaft mbH

(56) Entgegenhaltungen:
- WO-A1-2015/000656
- DE-A1-102010 031 276
- US-A1- 2003 137 372
- US-A1- 2007 028 829
- US-A1- 2010 123 615

## Beschreibung

### Gebiet der Erfindung

Die Erfindung betrifft die Füllstandmessung. Insbesondere betrifft die Erfindung ein Füllstandmessgerät mit einer Messelektronik zum Erzeugen eines Sendesignals und einer Hohlleiteranordnung zum Übertragen des Sendesignals von der Messelektronik an eine Antenne.

### Technischer Hintergrund

Bekannte Füllstandmessgeräte weisen eine Messelektronik auf, die zum Erzeugen eines Sendesignals und zum Auswerten des an der Füllgutoberfläche reflektierten Sendesignals eingerichtet ist. Von dieser Elektronik führt eine Hohlleiteranordnung zu einer Antenne, die dann das Sendesignal abstrahlt und nach dessen Reflexion wieder empfängt. Soll das elektrische Potenzial der Elektronikeinheit des Füllstandmessgeräts vom elektrischen Potenzial der auf dem Behälter montierten Antenne des Füllstandmessgeräts getrennt werden, kann eine Isolierung (Potentialtrennung) vorgesehen sein, die sich zwischen der Elektronik und der Antenne befindet.

US 2010/123615 A1 beschreibt ein Füllstandmessgerät, umfassend einen ersten Hohlleiter, einen zweiten Hohlleiter und ein Trennungselement zwischen dem ersten Hohlleiter und dem zweiten Hohlleiter. Das Trennungselement weist einen Rohrabschnitt auf, der koaxial zu den ersten und zweiten Hohlleitern ausgerichtet ist. Der Innendurchmesser des Rohrabschnitts ist kleiner als der Innendurchmesser der ersten und zweiten Hohlleiter.

### Zusammenfassung der Erfindung

Es ist eine Aufgabe der Erfindung, eine effektive und vorteilhafte Potentialtrennung für ein Füllstandmessgerät anzugeben.

Diese Aufgabe wird durch die Merkmale des unabhängigen Patentanspruchs gelöst. Weiterbildungen der Erfindung ergeben sich aus den Unteransprüche und der folgenden Beschreibung.

Die Erfindung betrifft ein Füllstandmessgerät gemäß dem angefügten unabhängigen Patentanspruch 1, beispielsweise ein berührungsfrei messendes Füllstandradar, mit einer Messelektronik, die eingerichtet ist, ein Sendesignal zu erzeugen. Dieses Sendesignal wird dann in einen ersten Hohlleiterabschnitt eingespeist, an den sich ein zweiter Hohlleiterabschnitt anschließt. Zwischen den beiden Hohlleiterabschnitten ist eine Potentialtrennung angeordnet, welche die beiden Hohlleiterabschnitte elektrisch voneinander isoliert. Die gesamte Hohlleiteranordnung (erster und zweiter Hohlleiterabschnitt sowie Potentialtrennung) ist zum Übertragen des Sendesignals von der Messelektronik an eine Antenne des Füllstandmessgeräts eingerichtet.

Die Potentialtrennung weist einen vorderen, der Füllgutoberfläche zu gerichteten Abschnitt mit einem ersten Durchlass und einen sich daran anschließenden, von der Füllgutoberfläche aus gesehenen hinteren Abschnitt mit einem zweiten Durchlass auf. Der erste Durchlass weist eine geringere Querschnittsfläche auf als der zweite Durchlass und der zweite Hohlleiterabschnitt ist in den zweiten Durchlass eingesteckt und dort befestigt.

Die Innenwandung des zweiten Durchlasses ist an den Außenumfang des zweiten Hohlleiterabschnitts angepasst, so dass dieser im zweiten Durchlass gehalten wird.

Beide Durchlässe sind durchlässig für das Sendesignal und lassen dieses gemäß einer Ausführungsform ungehindert oder zumindest weitgehend ungehindert passieren.

Gemäß einer weiteren Ausführungsform besteht die Potentialtrennung aus einem isolierenden Kunststoff, wie zum Beispiel PTFE, PFA, PP, PVDF oder PEEK.

Gemäß einer weiteren Ausführungsform ist die feste Isolation zwischen den beiden Potentialen der Antenne und der Messelektronik aus berührungsschutztechnischen Gründen oder explosionstechnischen Gründen mit einer Dicke von mindestens 0,5 mm ausgeführt.

Gemäß einer Ausführungsform weist der vordere Abschnitt der Potentialtrennung eine Länge von mindestens 2 mm auf, um die Luft- und Kriechstrecken-Anforderungen zu erfüllen.

Bei dem vorderen Abschnitt handelt es sich um einen rohrförmigen Abschnitt und bei dem hinteren Abschnitt handelt es sich beispielsweise ebenfalls um einen rohrförmigen Abschnitt, jedoch mit größerem Innen- und gegebenenfalls auch Außendurchmesser als der vordere Abschnitt.

Gemäß einer weiteren Ausführungsform ist der zweite Hohlleiterabschnitt in dem zweiten Durchlass um seine Längsachse verdrehbar gelagert, so dass die Ausrichtung der Antenne bezüglich im Messgerätegehäuse nachträglich justiert werden kann.

Gemäß der Erfindung ist zwischen der Innenwand des ersten Durchlasses und der Innenwand des zweiten Durchlasses eine Anschlagfläche vorgesehen, an welche der zweite Hohlleiterabschnitt anstößt, und welche den ersten Durchlass mit dem zweiten Durchlass verbindet.

Die Anschlagfläche entspricht der Stirnfläche des zweiten Hohlleiterabschnitts, so dass diese plan an der Anschlagfläche anliegt. Es kann vorgesehen sein, dass die Anschlagsfläche senkrecht zur Innenwandung des vorderen Abschnitts und des hinteren Abschnitts steht.

Gemäß der Erfindung ist der Innendurchmesser des ersten Durchlasses geringer als der Innendurchmesser des ersten Hohlleiterabschnitts, so dass sich hier eine Stufe ergibt.

Gemäß einer weiteren Ausführungsform ist der Innendurchmesser des ersten Durchlasses am Ende des ersten Durchlasses (also auf der dem Füllgut zugewandten Seite) gleich dem Innendurchmesser des ersten Hohlleiterabschnitts und am Anfang des ersten Durchlasses, also im Bereich der Anschlagfläche, gleich dem Innendurchmesser des zweiten Hohlleiterabschnitts.

Gemäß einer Ausführungsform weist der erste Hohlleiterabschnitt einen geringeren Innendurchmesser auf als der zweite Hohlleiterabschnitt. Erfindungsgemäß ist vorgesehen, dass der erste Durchlass konisch geformt ist.

Gemäß einer Ausführungsform ist eine Schnappverbindungsvorrichtung vorgesehen, eingerichtet zum lösbaren Verbinden des ersten Hohlleiterabschnitts mit der Potentialtrennung. Diese Schnappverbindungsvorrichtung kann in Form einer ringförmigen Nut im ersten Hohlleiterabschnitt in Kombination mit einem ringförmigen Element der Potentialtrennung, das ausgeführt ist, in die Nut einzuschnappen, wenn die Potentialtrennung in den ersten Hohlleiterabschnitt eingeschoben wird, ausgeführt sein. Alternativ können auch eine oder mehrere Einschnappelemente in der Potentialtrennung und entsprechende Ausnehmungen im ersten Hohlleiterabschnitt vorgesehen sein, so dass eine Verdrehsicherung bereitgestellt wird.

Gemäß einer weiteren Ausführungsform weist das Füllstandmessgerät ein dielektrisches Trennelement auf, das abdichtend in dem ersten Durchlass der Potentialtrennung angeordnet ist.

Es kann vorgesehen sein, dass das dielektrische Trennelement und die Potentialtrennung einstückig geformt sind. In diesem Fall handelt es sich bei dem ersten Durchlass nicht um ein Durchgangsloch. Vielmehr ist in diesem Fall der Begriff "Durchlass" als durchlässig für das Sendesignal zu verstehen, nicht jedoch als luftdurchlässig.

Gemäß einer weiteren Ausführungsform weist das Füllstandmessgerät eine Antenne auf, die einstückig mit dem ersten Hohlleiterabschnitt verbunden ist. Gemäß einer weiteren Ausführungsform der Erfindung ist der erste Hohlleiterabschnitt und/oder der zweite Hohlleiterabschnitt als Rundhohlleiter oder Rechteckhohlleiter ausgebildet. Ist der zweite Hohlleiterabschnitt als Rechteckhohlleiter ausgebildet, so kann vorgesehen sein, dass die Außenfläche des zweiten Hohlleiterabschnitts dort, wo er in die Potentialtrennung eingeschoben ist, zylindrisch ausgeführt ist, um ein Verdrehen zu ermöglichen.

Im Folgenden werden weitere Ausführungsformen beschrieben. Sind in den folgenden Figuren die gleichen Bezugszeichen angegeben, so bezeichnen diese gleiche oder ähnliche Elemente. Die Darstellungen in den Figuren sind schematisch und nicht maßstäblich.

Kurze Beschreibung der Figuren
Fig. 1, Fig. 2, Fig. 3, Fig. 8 und Fig. 9 zeigen nicht-erfindungsgemäße Hohlleiteranordnungen.
Fig. 4, Fig. 5, Fig. 6 und Fig. 7 zeigen erfindungsgemäße Hohlleiteranordnungen.
Fig. 10 zeigt ein Trennelement zum Einschub in eine Potentialtrennung
Fig. 11 zeigt ein Füllstandradar gemäß einer Ausführungsform.

### Detaillierte Beschreibung von Ausführungsformen

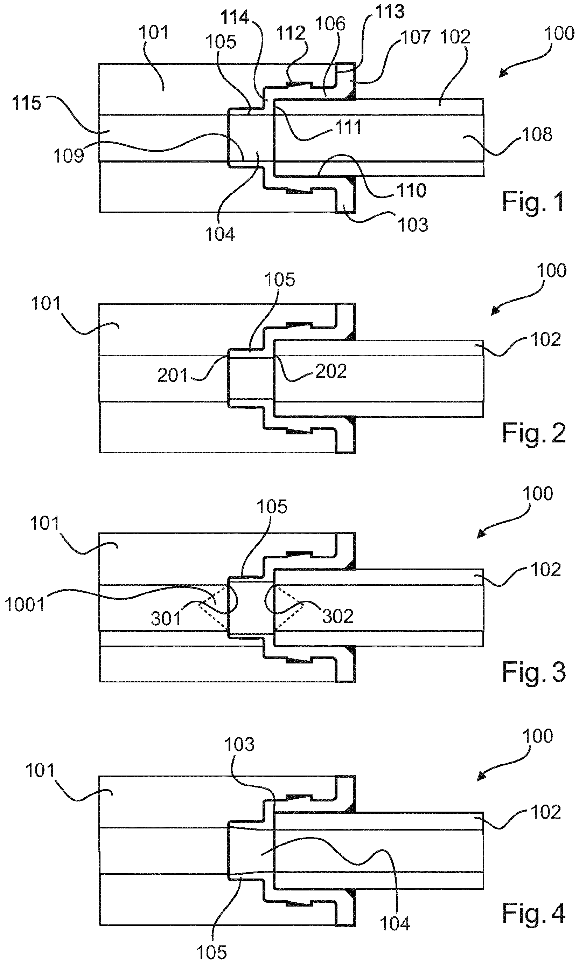

Fig. 1 zeigt eine nicht-erfindungsgemäße Hohlleiteranordnung 100 eines Füllstandmessgeräts. Die Hohlleiteranordnung weist einen ersten Hohlleiterabschnitt 101 und einen zweiten Hohlleiterabschnitt 102 auf. Der zweite Hohlleiterabschnitt 102 leitet das von einer Messelektronik erzeugte Sendesignal zum zweiten Hohlleiterabschnitt, der es der Antenne zuführt.

Zwischen den beiden Hohlleiterabschnitten 101, 102 befindet sich eine Potentialtrennung 103. Bei dieser Potentialtrennung handelt es sich um eine beispielsweise einstückige Vorrichtung aus isolierendem Material, wie PTFE, PFA, PP, PVDF oder PEEK. Dieses trennende Kunststoffelement 103 ist ganz oder zumindest teilweise in der Hohlleiterwandung im Verbindungsbereich zwischen den beiden Hohlleiterabschnitten 101, 102, integriert. Dies führt zu guten, breitbandigen Übertragungseigenschaften des Sendesignals und des an der Füllgutoberfläche reflektierten Empfangssignals. Beispielsweise kann auf diese Weise erreicht werden, dass die Rückflussdämpfung größer als 21 dB ist und die Transmissionsdämpfung kleiner als 0,9 dB über einen Frequenzbereich von 8 GHz, beispielsweise zwischen 76 GHz und 84 GHz.

Die in den Figuren gezeigten Hohlleiterabschnitte können Rundhohlleiter oder auch Rechteckhohlleiter sein. Im Falle eines Rechteckhohlleiters kann vorgesehen sein, dass die Außenfläche des zweiten Hohlleiterabschnitts 102 zumindest in dem Bereich, der in die Potentialtrennung eingeschoben ist, rund ist, so dass er sich in der Potentialtrennung drehen lässt, um die Elektronik gegen die Antenne drehen zu können, was zu einer günstigeren Einbauposition und, je nach Antennenausführung, zu einer günstigen Orientierung der Polarisationsebene des Sendesignals führen kann.

Die Potentialtrennung 103 weist einen vorderen Abschnitt 105 auf, der rohrförmig ausgeführt ist. Daran schließt sich ein hinterer Abschnitt 106, 107 an, der ebenfalls rohrförmig ausgeführt ist, jedoch mit einem größeren Innen- und Außendurchmesser und mit einer Abwinkelung 107 an dessen Ende, das der Elektronik zugewandt ist. Diese Abwinkelung 107 weist eine Anstoßfläche 113 auf, die an der Abschlussfläche des ersten Hohlleiterabschnitts 101 anliegt.

Zwischen dem vorderen, rohrförmigen Abschnitt 105 der Potentialtrennung und dem hinteren Abschnitt 106, 107 befindet sich ein stufenförmiger Übergang 114 mit einer in Richtung Messelektronik gerichteten Anschlagfläche 111, an der die Stirnfläche des zweiten Hohlleiterabschnitts 103 anstößt.

Der Innenraum 115, 104, 108 der Hohlleiteranordnung 100 weist keine Stufung auf, da der Innendurchmesser des ersten Hohlleiterabschnitts den Innendurchmessern des zweiten Hohlleiterabschnitts und des Innenrohrs der Potentialtrennung 103 entspricht.

In anderen Worten befindet sich das innere Kunststoffrohr des ersten, vorderen Abschnitts 105 der Potentialtrennung vollständig in der Hohlleiterwandung der Hohlleiteranordnung.

Die Innenfläche 109 des vorderen Abschnitts 105 der Potentialtrennung ist zylindrisch. Auch die Innenfläche 110 des hinteren Abschnitts 106, 107 der Potentialtrennung ist zylindrisch.

Die Potentialtrennung 103 lässt sich bei ihrer Montage in eine Ausfräsung am Ende des ersten Hohlleiterabschnitts 101 einschieben. Es kann eine Schnappverbindung 112 vorgesehen mit mehreren einzelnen oder einem ringförmigen Schnapphaken sein, die/der in entsprechende Aussparungen bzw. eine ringförmige Nut einschnappen/einschnappt, wenn die Potentialtrennung vollständig in den ersten Hohlleiterabschnitt eingeschoben ist.

Es kann vorgesehen sein, dass die Potentialtrennung elastisch verformbar ist, so dass durch Zusammendrücken der Abwinkelung 107 die Schnappverbindung gelöst werden kann, wenn der zweite Hohlleiterabschnitt 102 nicht in die Potentialtrennung eingeschoben ist. Hierdurch ist ein leichtes Austauschen der Potentialtrennung möglich.

Der erste Hohlleiterabschnitt kann beispielsweise eine Länge von 10 bis 12 mm aufweisen, so auch der zweite Hohlleiterabschnitt.

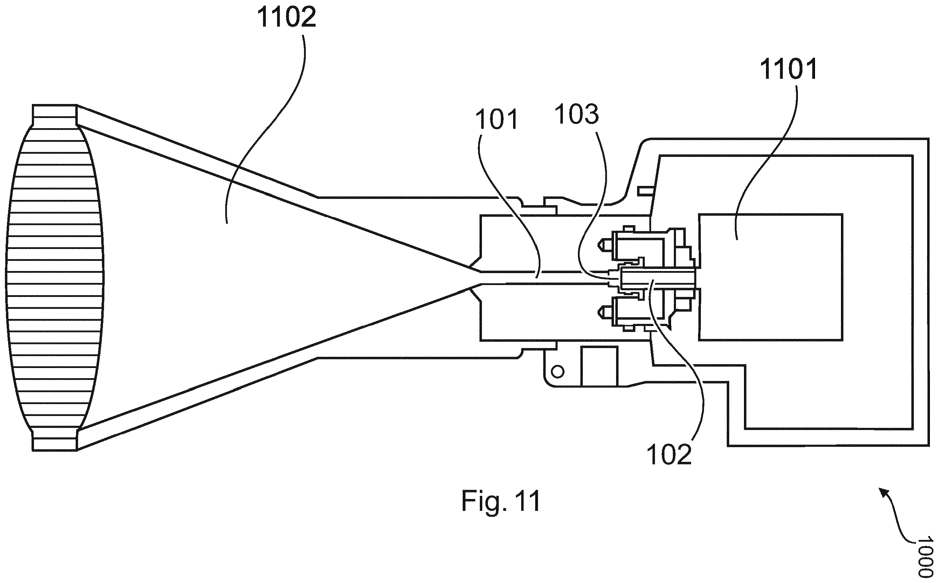

Die Antenne kann einstückig mit dem ersten Hohlleiterabschnitt 101 verbunden sein oder daran angeschlossen sein, wie dies in der Fig. 11 dargestellt ist.

Fig. 2 zeigt eine nicht-erfindungsgemäße Hohlleiteranordnung 100. Im Unterschied zur Ausführungsform der Fig. 1 befindet sich das innere Kunststoffrohr 105 teilweise in der Wandung der Hohlleiteranordnung und teilweise innerhalb des eigentlichen Hohlleiters, also des Sendesignal leitenden "Kanals" im Inneren der Hohlleiteranordnung. In anderen Worten ist der Innendurchmesser des Kunststoffrohrs 105 geringer als der Innendurchmesser des ersten Hohlleiterabschnitts und des zweiten Hohlleiterabschnitts 101, 102, so dass im Inneren des Hohlleiters zwei Stufen 201, 202 auftreten. Da das Loch im vorderen Abschnitt 105 der Potentialtrennung kleiner ist als der Innendurchmesser des vorderen und hinteren Hohlleiterabschnitts, wird es Verschmutzungen erschwert, von der Antenne zur Messgeräteelektronik zu gelangen.

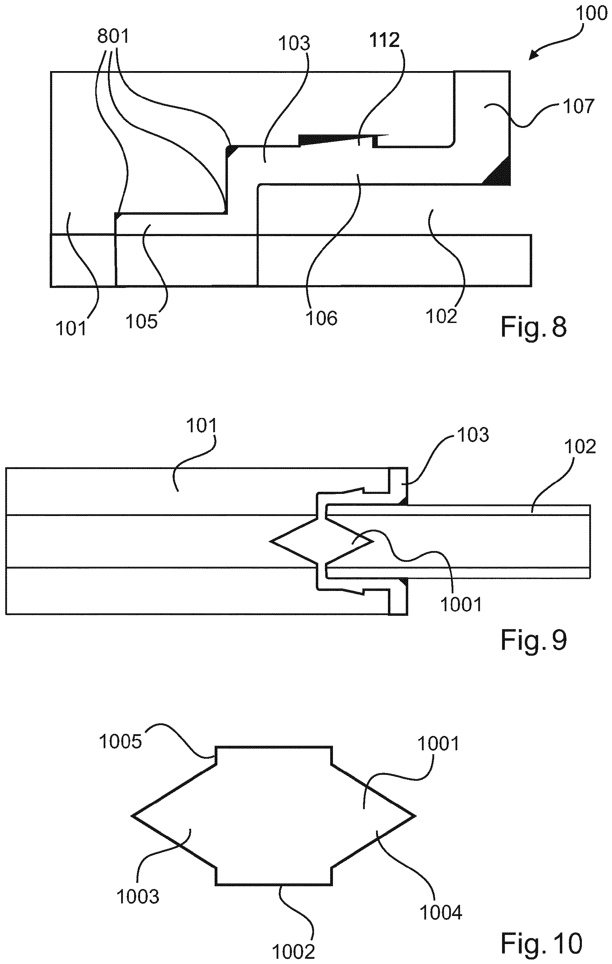

Fig. 3 zeigt eine weitere nicht-erfindungsgemäße Hohlleiteranordnung 100, bei der das innere Kunststoffrohr der Potentialtrennung komplett in der Wandung der Hohlleiteranordnung integriert ist und in Bezug auf die Hohlleiterwandung zurückversetzt ist. In anderen Worten ist der Innendurchmesser des vorderen Abschnitts 105 größer als der Innendurchmesser des ersten Hohlleiterabschnitts 101 und des zweiten Hohlleiterabschnitts 102. Dies ermöglicht es beispielsweise, dass ein dielektrisches Trennelement, das beispielsweise zwei Anpasskegel aufweist (vgl. Fig. 9), in die Durchgangsöffnung im vorderen Abschnitt 105 eingeschoben werden kann und dann durch die Kanten 301, 302 gehalten wird.

Fig. 4 zeigt eine Ausführungsform einer Hohlleiteranordnung 100, bei der sich das Kunststoffrohr 105 der Potentialtrennung 103 komplett innerhalb der Hohlleiterwandung befindet, ohne dass Stufen auftreten. Da der Innendurchmesser des ersten Hohlleiterabschnitts 101 größer ist als der Innendurchmesser des zweiten Hohlleiterabschnitts 102, ist die Durchgangsöffnung 104 des vorderen Abschnitt 105 der Potentialtrennung konisch geformt und weitet sich in Richtung Antenne auf. Allerdings ist der vordere Abschnitt 105 nur innen konisch, außen zylindrisch.

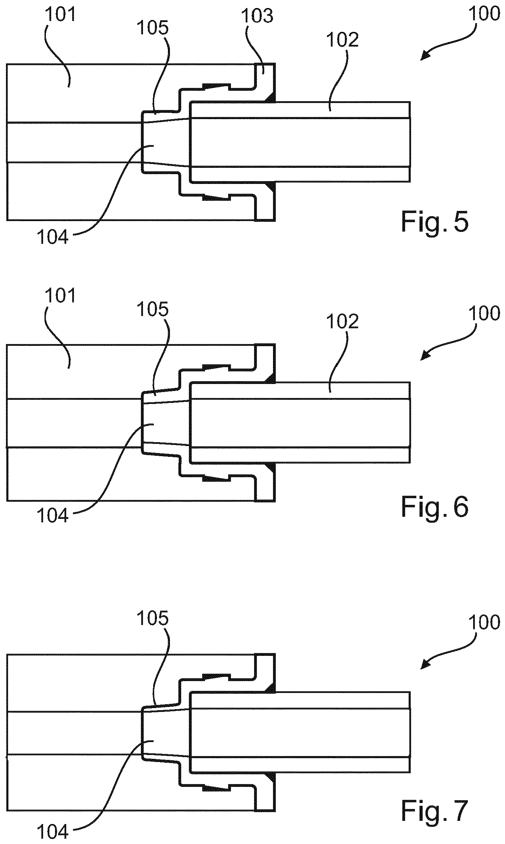

Fig. 5 zeigt ein umgekehrtes Beispiel, bei dem der Innendurchmesser des ersten Hohlleiterabschnitts 101 geringer ist als der Innendurchmesser des zweiten Hohlleiterabschnitts 102. Da keine Stufen vorgesehen sind, ist die Durchtrittsöffnung 104 im vorderen Abschnitt 105 der Potentialtrennung 103 ebenfalls konisch geformt, jedoch mit einer Aufweitung in Richtung der Messgeräteelektronik. Auch hier ist die Außenfläche des vorderen Bereichs 105 zylindrisch.

In der Ausführungsform gemäß Fig. 6 und gemäß Fig. 7 ist die Durchlassöffnung 104 des vorderen Abschnitts 105 der Potentialtrennung ebenfalls konisch geformt; im Ausführungsbeispiel der Fig. 6 und 7 ist auch die Außenfläche konisch geformt. Gemäß Fig. 6 sind zwei Stufen vorgesehen, da sich das innere Kunststoffrohr 105 der Potentialtrennung nur teilweise innerhalb der Hohlleiterwandung befindet. Es kommt zu einem Durchmessersprung zwischen den einzelnen Hohlleiterabschnitten und im vorderen Abschnitt 105 der Potentialtrennung. Im Unterschied zur Ausführungsform der Fig. 6 ist in der Ausführungsform gemäß Fig. 7 kein solcher Durchmessersprung vorgesehen. Vielmehr sind die Übergänge im Hohlleiterinneren kontinuierlich.

Fig. 8 zeigt eine Detaildarstellung einer Hohlleiteranordnung 100, bei der Fasen bzw. Radien an den Kanten 801 der Potentialtrennung vorgesehen sind. Hierdurch kann die Montage der Potentialtrennung vereinfacht werden.

Anstelle einer ringförmig angeordneten Schnapphakenvorrichtung 112 können auch mehrere einzelne, nur teilweise umlaufende Schnapphaken bzw. Befestigungsvorrichtungen zur Befestigung, Sicherung und Schutz gegen Herausfallen bei nicht gesteckter Elektronik vorgesehen sein. Hierdurch wird auch eine Verdrehsicherung bereitgestellt.

Fig. 9 zeigt eine Hohlleiteranordnung mit einem in die Potentialtrennung integrierten Trennelement 1001, das an den stufenförmigen Übergang 114 der Potentialtrennung 103 angeschlossen ist. Wie in der Ausführungsform der Fig. 9 kann vorgesehen sein, dass das Trennelement einstückig mit der Potentialtrennung geformt ist.

Fig. 10 zeigt ein Trennelement 1001 zum Einschub in eine Potentialtrennung gemäß einer weiteren Ausführungsform. Das Trennelement weist einen zylindrischen (oder konischen) Bereich 1002 auf, an den sich nach vorne und nach hinten jeweils ein Anpasskegel 1003, 1004 anschließt. Der Bereich 1002 kann einen größeren (oder kleineren) Durchmesser aufweisen, als die Anpasskegel 1003, 1004. Die Potentialtrennung, in die das Trennelement geschoben wird, ist an die Außenkontur des Trennelements angepasst, so dass es in der Potentialtrennung gehalten wird.

Fig. 11 zeigt ein Füllstandmessgerät 1000 mit einer Messelektronik 1101, die an den zweiten Hohlleiterabschnitt 102 angeschlossen ist und eine Antenne 1102, beispielsweise eine Hornantenne, die an den ersten Hohlleiterabschnitt 101 angeschlossen ist. Beispielsweise ist die Antenne 1102 einstückig mit dem ersten Hohlleiterabschnitt 101 verbunden.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgerät (1000), aufweisend:
eine Messelektronik (1101), eingerichtet zum Erzeugen eines Sendesignals;
eine Hohlleiteranordnung (100), die einen ersten Hohlleiterabschnitt (101), einen zweiten Hohlleiterabschnitt (102) und eine dazwischen angeordnete Potentialtrennung (103), zum Übertragen des Sendesignals von der Messelektronik an eine Antenne (1102) des Füllstandmessgeräts, aufweist;
wobei die Potentialtrennung (103) einen vorderen Abschnitt (105) in Form eines inneren Kunststoffrohrs mit einem ersten Durchlass (104), und einen sich daran anschließenden hinteren Abschnitt (106, 107) mit einem zweiten Durchlass (108) aufweist, wobei sich zwischen dem vorderen Abschnitt und dem hinteren Abschnitt ein stufenförmiger Übergang (114) mit einer in Richtung der Messelektronik gerichteten Anschlagfläche (111) befindet, an der die Stirnfläche des zweiten Hohlleiterabschnitts anstößt;
wobei der erste Durchlass (104) eine geringere Querschnittsfläche aufweist als der zweite Durchlass (108);
wobei der zweite Hohlleiterabschnitt (102) mit dessen Außenumfang in die Innenwandung des zweiten Durchlasses (108) eingesteckt ist, so dass der zweite Hohlleiterabschnitt (102) in dem zweiten Durchlass (108) gehalten wird;
**dadurch gekennzeichnet, dass** der erste Durchlass (104) konisch geformt ist;
dass das innere Kunststoffrohr des vorderen Abschnitts (105) der Potentialtrennung (103) ganz oder zumindest teilweise in der Wandung der Hohlleiteranordnung integriert ist;
und dass der erste Durchlass (104) und der zweite Durchlass (108) derart ausgebildet sind, um das Sendesignal ungehindert oder zumindest weitgehend ungehindert durchzulassen.

2. Füllstandmessgerät (1000) nach Anspruch 1,
wobei der zweite Hohlleiterabschnitt (102) in dem zweiten Durchlass um seine Längsachse verdrehbar gelagert ist.

3. Füllstandmessgerät (1000) nach einem der vorhergehenden Ansprüche,
wobei zwischen der Innenwand (109) des ersten Durchlasses (104) und der Innenwand (110) des zweiten Durchlasses (102) eine Anschlagsfläche (111) vorgesehen ist, an welche der zweite Hohlleiterabschnitt (102) anstößt, und welche den ersten Durchlass mit dem zweiten Durchlass verbindet.

4. Füllstandmessgerät (1000) nach Anspruch 3,
wobei die Stirnfläche des zweiten Hohlleiterabschnitts (102) der Anschlagsfläche (111) entspricht.

5. Füllstandmessgerät (1000) nach einem der Ansprüche 1 bis 4,
wobei der Innendurchmesser des ersten Durchlasses (104) geringer ist als der Innendurchmesser des ersten Hohlleiterabschnitts (101).

6. Füllstandmessgerät (1000) nach einem der Ansprüche 1 bis 4,
wobei der Innendurchmesser des ersten Durchlasses (104) am Ende des ersten Durchlasses dem Innendurchmesser des ersten Hohlleiterabschnitts (101) entspricht und am Anfang des ersten Durchlasses, im Bereich der Anschlagfläche (111), dem Innendurchmesser des zweiten Hohlleiterabschnitts (102) entspricht.

7. Füllstandmessgerät (1000) nach einem der vorhergehenden Ansprüche,
wobei der erste Hohlleiterabschnitt (101) einen geringeren Innendurchmesser aufweist als der zweite Hohlleiterabschnitt (102).

8. Füllstandmessgerät (1000) nach einem der vorhergehenden Ansprüche, weiter aufweisend:
eine Schnappverbindungsvorrichtung (112), eingerichtet zum lösbaren Verbinden des ersten Hohlleiterabschnitts (101) mit der Potentialtrennung (103).

9. Füllstandmessgerät (1000) nach einem der vorhergehenden Ansprüche, weiter aufweisend:
ein dielektrisches Trennelement (1001), das abdichtend in dem ersten Durchlass (104) der Potentialtrennung (103) angeordnet ist.

10. Füllstandmessgerät (1000) nach Anspruch 9,
wobei das dielektrische Trennelement (1001) und die Potentialtrennung (103) einstückig geformt sind.

11. Füllstandmessgerät (1000) nach einem der vorhergehenden Ansprüche,
wobei die Antenne (1102) einstückig mit dem ersten Hohlleiterabschnitt (101) verbunden ist.

12. Füllstandmessgerät (1000) nach einem der vorhergehenden Ansprüche,
wobei der erste Hohlleiterabschnitt (101) und/oder der zweite Hohlleiterabschnitt (102) als Rundhohlleiter oder Rechteckhohlleiter ausgebildet ist.

## Claims

1. Fill level measurement device (1000), comprising:
a measurement electronics (1101), configured to generate a transmission signal;
a waveguide arrangement (100), which comprises a first waveguide section (101), a second waveguide section (102) and a potential isolation (103) arranged therebetween, for transmitting the transmission signal from the measurement electronics to an antenna (1102) of the fill level measurement device;
wherein the potential isolation (103) has a front section (105) in form of an inner plastic tube with a first passage (104), and an adjoining rear section (106, 107) with a second passage (108), wherein between the front section and the rear section a stepped transition (114) with a stop surface (111) is located, which is directed in the direction of the measurement electronics and against which the end face of the second waveguide section abuts;
wherein the first passage (104) has a smaller cross-sectional area than the second passage (108);
wherein the second waveguide section (102) is inserted with its outer periphery into the inner wall of the second passage (108) so that the second waveguide section (102) is held in the second passage (108);
**characterized in**
**that** the first passage (104) is conical;
**that** the inner plastic tube of the front section (105) of the potential isolation (103) is completely or at least partially integrated in the wall of the waveguide arrangement;
and **that** the first passage (104) and the second passage (108) are configured to allow the transmitted signal to pass through unimpeded or at least substantially unimpeded.

2. Fill level measurement device (1000) according to claim 1,
wherein the second waveguide section (102) is mounted in the second passage so as to be rotatable about its longitudinal axis.

3. Fill level measurement device (1000) according to any one of the preceding claims,
wherein a stop surface (111) is provided between the inner wall (109) of the first passage (104) and the inner wall (110) of the second passage (102), against which the second waveguide section (102) abuts, and which connects the first passage to the second passage.

4. Fill level measurement device (1000) according to claim 3,
wherein the end face of the second waveguide section (102) corresponds to the stop face (111).

5. Fill level measurement device (1000) according to any one of claims 1 to 4,
wherein the inner diameter of the first passage (104) is less than the inner diameter of the first waveguide section (101).

6. Fill level measurement device (1000) according to any one of claims 1 to 4,
wherein the inner diameter of the first passage (104) at the end of the first passage corresponds to the inner diameter of the first waveguide section (101) and the inner diameter of the first passage (104) at the beginning of the first passage corresponds, in the region of the stop face (111), to the inner diameter of the second waveguide section (102).

7. Fill level measurement device (1000) according to any one of the preceding claims,
wherein the first waveguide section (101) has a smaller inner diameter than the second waveguide section (102).

8. Fill level measurement device (1000) according to any one of the preceding claims, further comprising:
a snap-connection device (112), configured to releasably connect the first waveguide section (101) to the potential isolation (103).

9. Fill level measurement device (1000) according to any one of the preceding claims, further comprising:
a dielectric isolator (1001) sealingly arranged in the first passage (104) of the potential isolation (103).

10. Fill level measurement device (1000) according to claim 9,
wherein the dielectric isolator (1001) and the potential isolation (103) are integral.

11. Fill level measurement device (1000) according to any one of the preceding claims,
wherein the antenna (1102) is integrally connected to the first waveguide section (101).

12. Fill level measurement device (1000) according to any one of the preceding claims,
wherein the first waveguide section (101) and/or the second waveguide section (102) is formed as a round waveguide or rectangular waveguide.

## Revendications

1. Appareil de mesure de niveau de remplissage (1000), présentant :
une électronique de mesure (1101) conçue pour produire un signal d'émission ;
un agencement conducteur creux (100) qui présente une première portion conductrice creuse (101), une deuxième portion conductrice creuse (102) et une séparation galvanique (103) interdisposée, pour transmettre le signal d'émission de l'électronique de mesure à une antenne (1102) de l'appareil de mesure de niveau de remplissage ;
dans lequel la séparation galvanique (103) présente une portion avant (105) sous forme d'un tube plastique intérieur avec un premier passage (104), et une portion arrière (106, 107) se raccordant dessus avec un deuxième passage (108), dans lequel une transition (114) étagée se trouve entre la portion avant et la portion arrière, avec une face de butée (111) orientée en direction de l'électronique de mesure, sur laquelle vient buter la face avant de la deuxième portion conductrice creuse ;
dans lequel le premier passage (104) présente une aire transversale inférieure au deuxième passage (108) ;
dans lequel la deuxième portion conductrice creuse (102) est insérée par son pourtour extérieur dans la paroi intérieure du deuxième passage (108), de sorte que la deuxième portion conductrice creuse (102) est maintenue dans le deuxième passage (108) ;
**caractérisé en ce que** le premier passage (104) est conique ;
que le tube plastique intérieur de la portion avant (105) de la séparation galvanique (103) est intégré complètement ou au moins partiellement dans la paroi de l'agencement conducteur creux ; et
que le premier passage (104) et le deuxième passage (108) sont conçus pour laiser passer le signal d'émission sans obstacle ou au moins sans obstacle dans une large mesure.

2. Appareil de mesure de niveau de remplissage (1000) selon la revendication 1,
dans lequel la deuxième portion conductrice creuse (102) est montée rotatif sur son axe longitudinal dans le deuxième passage.

3. Appareil de mesure de niveau de remplissage (1000) selon l'une des revendications précédentes,
dans lequel, entre la paroi intérieure (109) du premier passage (104) et la paroi intérieure (110) du deuxième passage (102), il est prévu une face de butée (111) contre laquelle vient buter la deuxième portion conductrice creuse (102) et laquelle relie le premier passage au deuxième passage.

4. Appareil de mesure de niveau de remplissage (1000) selon la revendication 3,
dans lequel la face avant de la deuxième portion conductrice creuse (102) correspond à la face de butée (111).

5. Appareil de mesure de niveau de remplissage (1000) selon l'une des revendications 1 à 4,
dans lequel le diamètre intérieur du premier passage (104) est inférieur au diamètre intérieur de la première portion conductrice creuse (101).

6. Appareil de mesure de niveau de remplissage (1000) selon l'une des revendications 1 à 4,
dans lequel le diamètre intérieur du premier passage (104) à l'extrémité du premier passage correspond au diamètre intérieur de la première portion conductrice creuse (101) et au début du premier passage, au niveau de la face de butée, correspond au diamètre intérieur de la deuxième portion conductrice creuse (102).

7. Appareil de mesure de niveau de remplissage (1000) selon l'une des revendications précédentes,
dans lequel la première portion conductrice creuse (101) présente un diamètre intérieur inférieur à la deuxième portion conductrice creuse (102).

8. Appareil de mesure de niveau de remplissage (1000) selon l'une des revendications précédentes, présentant en outre :
un dispositif à liaison par encliquetage (112), conçu pour relier la première portion conductrice creuse (101) à la séparation galvanique (103) de manière séparable.

9. Appareil de mesure de niveau de remplissage (1000) selon l'une des revendications précédentes, présentant en outre :
un séparateur diélectrique (1001) qui est disposé en étanchéité dans le premier passage (104) de la séparation galvanique (103).

10. Appareil de mesure de niveau de remplissage (1000) selon la revendication 9,
dans lequel le séparateur diélectrique (1001) et la séparation galvanique (103) sont formés d'un seul tenant.

11. Appareil de mesure de niveau de remplissage (1000) selon l'une des revendications précédentes, dans lequel l'antenne (1102) est reliée d'un seul tenant à la première portion conductrice creuse creux (101).

12. Appareil de mesure de niveau de remplissage (1000) selon l'une des revendications précédentes, dans lequel la première portion conductrice creuse (101) et/ou la deuxième portion conductrice creuse (102) est/sont conçue(s) en tant que conducteur creux rond ou conducteur creux carré.
